# EUROPEAN PATENT APPLICATION

(11) **EP 3 533 845 A1**
(43) Date of publication of application: **04.09.2019**
(21) Application number: 17865867.0
(22) Date of filing: 30.10.2017
(51) Int. Cl.: C09D 127/12, B05D 7/00, B05D 7/24, C09D 7/40, C09D 167/00, C09D 169/00, C09D 175/04

(54) **COATING COMPOSITION FOR VEHICLE INTERIOR MEMBER, VEHICLE INTERIOR MEMBER, AND METHOD FOR MANUFACTURING VEHICLE INTERIOR MEMBER**

(30) Priority: 31.10.2016 JP 2016212758
(71) Applicant: AGC INC., Chiyoda-ku, Tokyo 1008405 (JP)
(72) Inventor: CEDRIC CHIN, Yan Sheng, Tokyo 100-8405 (JP); SAITO, Shun, Tokyo 100-8405 (JP); OCHI, Shuhei, Tokyo 100-8405 (JP)
(74) Representative: Müller-Boré & Partner Patentanwälte PartG mbB
(86) International application number: PCT/JP2017/039116
(87) International publication number: WO 2018/079775

(57) **Abstract**

The object of the present invention is to provide a coating composition for vehicle interior members excellent in scratch resistance and resistance to sunscreen staining, a vehicle interior member having a cured film formed from the composition, and a method for manufacturing the vehicle interior member.

The coating composition for vehicle interior members of the present invention comprises a fluorinated polymer having units based on a fluoroolefin and units based on a monomer having a crosslinkable group, a fluorine-free polymer having crosslinkable groups, and a curing agent, and the glass transition temperature of the fluorinated polymer is 50°C or above.

## Description

### TECHNICAL FIELD

The present invention relates to a coating composition for vehicle interior members, a vehicle interior member, and a method for manufacturing a vehicle interior member.

### BACKGROUND ART

Some vehicle interior members (such as dashboards (instrument panels), center consoles, door trims, center clusters, switch panels, and shift nobs) have cured films of paints for surface protection or decoration, or a better feel. These paints are directly applied to the substrate of a vehicle interior member or to a resin film to be bonded to the substrate of a vehicle interior member.

Patent Document 1 discloses use of a coating composition containing a fluorinated polymer having a hydroxy group, a polycarbonate diol having a certain molecular weight and a curing agent having a specific functional group for vehicle interior members.

### PRIOR ART DOCUMENT

### PATENT DOCUMENT

Patent Document 1: JP-A-H03-91552

### DISCLOSURE OF INVENTION

### TECHNICAL PROBLEM

Vehicle interior members require resistance to sunscreen staining because sunscreens, suntan oils and the like can stain and degrade vehicle interior members. Vehicle interior members also require excellent scratch resistance.

The present inventors evaluated cured films formed from the coating composition disclosed in Patent Document 1 and found that their resistance to sunscreen staining was below the currently required level.

The present invention was made in view of the above-mentioned problems and aims to provide a coating composition for vehicle interior members which can impart excellent scratch resistance and excellent resistance to sunscreen staining, a vehicle interior member having a cured film formed from the composition, and a method for manufacturing the vehicle interior member.

### SOLUTION TO PROBLEM

As a result of their intensive studies on the above-mentioned problem, the present inventors found that a coating composition comprising a fluorinated polymer having a crosslinkable group, a glass transition temperature of 50°C or above, a fluorine-free polymer having a crosslinkable group, and a curing agent produces the desired effects and arrived at the present invention.

Namely, the present inventors found that the above-mentioned problem can be solved by the following constructions.
[1] A coating composition for vehicle interior members, which comprises a fluorinated polymer having units based on a fluoroolefin and units based on a monomer having a first crosslinkable group, a fluorine-free polymer having at least two second crosslinkable groups, and a curing agent having at least two functional groups reactive with both the first and second crosslinkable groups, wherein the glass transition temperature of the fluorinated polymer is 50°C or above.
[2] The coating composition according to [1], wherein the number average molecular weight of the fluorinated polymer and the number average molecular weight of the fluorine-free polymer are both at least 1,000.
[3] The coating composition according to [1] or [2], wherein the fluoroolefin is tetrafluoroethylene or chlorotrifluoroethylene.
[4] The coating composition according to any one of [1] to [3], wherein the fluorinated polymer further contains third units based on a monomer which does not contain fluorine atoms or the first crosslinkable group and has a C₃₋₆ branched alkyl group or a C₄₋₁₂ monovalent cyclic hydrocarbon group, and the content of the third units is from 10 to 45 mol% relative to all the units in the fluorinated polymer.
[5] The coating composition according to any one of [1] to [4], wherein the fluorine-free polymer has a glass transition temperature of 0°C or below.
[6] The coating composition according to any one of [1] to [5], wherein the fluorine-free polymer is produced by condensation polymerization or ring opening polymerization.
[7] The coating composition according to any one of [1] to [6], wherein both the first and second crosslinkable groups are hydroxy groups.
[8] The coating composition according to [7], wherein the fluorinated polymer has a hydroxy value of at most 200 mg KOH/g.
[9] The coating composition according to [7], wherein the fluorine-free polymer has a hydroxy value of at most 250 mg KOH/g.
[10] The coating composition according to [6], [7] or [9], wherein the fluorine-free polymer is polycarbonate polyol or polyester polyol.
[11] The coating composition according to any one of [1] to [10], wherein the absolute difference between the fluorinated polymer and the fluorine-free polymer in SP value is from 0 to 25 (J/cm³)^{1/2}.
[12] The coating composition according to any one of [1] to [11], wherein the curing agent has an isocyanato group or a blocked isocyanato group.
[13] A vehicle interior member having a vehicle interior substrate and a cured film on the vehicle interior substrate, wherein the cured film is formed by using the coating composition as defined in any one of [1] to [12].
[14] A method for manufacturing a vehicle interior member, which comprises forming a coated film by applying the coating composition as defined in any one of [1] to [12], and curing the coated film to form a cured film.

### ADVANTAGEOUS EFFECTS OF INVENTION

According to the present invention, it is possible to provide a coating composition for vehicle interior members which can impart excellent scratch resistance and excellent resistance to sunscreen staining, a vehicle interior member having a cured film formed from the composition and a method for manufacturing the vehicle interior member.

### DESCRIPTION OF EMBODIMENTS

Meanings of terms in the present invention are as follows.

"Unit" is a generic term for an atomic group derived from 1 molecule of a monomer by polymerization directly, or by polymerization and subsequent partial chemical modification. Further, a "unit based on a monomer" may also be referred to simply as a "unit". The contents (mol%) of the respective units relative to all the units in a polymer are estimated from the amounts of the respective components charged.

The "glass transition temperature" is a value measured by the method stipulated in JIS K 6240 (2011). The "glass transition temperature" may be referred to also as "Tg".

The acid value and the hydroxy value are measured by titrating a given amount of a resin dissolved in tetrahydrofuran with a KOH/ethanol solution using phenolphthalein as an indicator in accordance with JIS K 0070-3 (1992).

The "number average molecular weight" and the "weight average molecular weight" are measured by gel permeation chromatography (GPC) using polystyrene as the standard. The "number average molecular weight" may be referred to also as "Mn", and the "weight average molecular weight" may be referred to also as "Mw".

The "fluorine content" means the proportion (mass%) of fluorine atoms to the total mass of a fluorinated polymer and is determined by analyzing the fluorinated polymer by NMR spectrometry.

"SP value" means solubility parameter and is defined as the square root of the cohesive-energy density, which is the molar energy of vaporization per unit volume, and a quantity which indicates the polarity per unit volume. SP value is calculated by Fedros' method (see, R. F. Fedros, Polym. Eng. Sci., 14[2] 147 (1974)).

"Solids" mean a fraction of a coating composition containing a solvent or a dispersion medium, exclusive of the solvent and the dispersion medium.

The coating composition for vehicle interior members of the present invention (hereinafter referred to also as "the coating composition of the present invention") comprises a fluorinated polymer having units based on a fluoroolefin and units based on a monomer having a first crosslinkable group, a fluorine-free polymer having at least two second crosslinkable groups (hereinafter referred to simply as "fluorine-free polymer"), and a curing agent having at least two functional groups reactive with both the first crosslinkable group and the second crosslinkable groups, and the fluorinated polymer has a Tg of 50°C or above.

Namely, it seems that because of the use of a fluorinated polymer having such a high Tg as 50°C or above, the cured film obtained by curing a coated film of the coating composition of the present invention (hereinafter referred to simply as "cured film") is less tacky, and hence sunscreens are unlikely to adhere to and permeate into the cured film. It also seems that the crosslinks formed between the fluorine-free polymer and the fluorinated polymer via the curing agent make the cured film harder and more scratch resistant.

Namely, it is supposed that the decrease in tackiness of the cured film by the fluorinated polymer having a high Tg and the increase of the hardness of the cured film by the fluorine-free polymer synergistically produce remarkable effect on scratch resistance and resistance to sunscreen staining.

Hereinafter, mere "resistance to staining" means resistance to sunscreen staining. As sunscreens, Coppertone® and the like may be mentioned.

The fluorinated polymer in the present invention has units based on a fluoroolefin (hereinafter referred to also as "units F") and units based on a monomer having a first crosslinkable group (hereinafter referred to also as "units C").

The fluoroolefin is an olefin having one or more of hydrogen atoms substituted by fluorine atoms.

In the fluoroolefin, one or more of hydrogen atoms not substituted by fluorine atoms may be substituted by chlorine atoms.

As the fluoroolefin, CH₂=CF₂, CF₂=CF₂, CF₂=CFCF₃ and CHF=CHCF₃ are preferred, and CF₂=CF₂ or CF₂=CFCl are more preferred in view of the weatherability of the cured film.

Two or more fluoroolefins may be used in combination.

The content of units F is preferably from 20 to 70 mol%, more preferably from 30 to 70 mol%, particularly preferably from 40 to 60 mol%, relative to all the units in the fluorinated polymer in view of the weatherability of the cured film.

The crosslinkable group in the monomer having a crosslinkable group is preferably a functional group having active hydrogen (a hydroxy group, a carboxy group, an amino group, etc.), or a hydrolyzable silyl group (an alkoxysilyl group, etc.), more preferably a carboxy group or a hydroxy group, particularly preferably a hydroxy group in view of the hardness of the cured film.

Examples of the monomer having a crosslinkable group include hydroxyalkyl vinyl ethers, hydroxycycloalkyl vinyl ethers, hydroxyalkyl vinyl esters, hydroxycycloalkyl vinyl esters, hydroxyalkyl allyl ethers, hydroxyalkyl allyl esters, hydroxyalkyl acrylates and hydroxyalkyl methacrylates, more specifically 2-hydroxyethyl vinyl ether, 4-hydroxymethylcyclohexyl vinyl ether, 4-hydroxybutyl vinyl ether, cyclohexanedimethanol monovinyl ether, hydroxyethyl ally ether, hydroxyethyl acrylate and hydroxyethyl methacrylate. Among them, hydroxyalkyl vinyl ether is preferred, and 4-hydroxybutyl vinyl ether is more preferred in view of copolimerizability and weatherability of the cured film.

Two or more monomers having a crosslinkable group may be used in combination. The content of units C is preferably from 1 to 40 mol%, more preferably from 3 to 25 mol%, particularly preferably from 5 to 15 mol%, relative to all the units in the fluorinated polymer in view of scratch resistance and resistance to staining.

The fluorinated polymer is preferred to further contain third units (hereinafter referred to also as "units T") based on a monomer which does not contain fluorine atoms or the above-mentioned crosslinkable group and has a C₃₋₆ branched alkyl group or a C₄₋₁₂ monovalent cyclic hydrocarbon group in order to adjust the Tg of the fluorinated polymer.

The branched alkyl group is preferably an iso-propyl group, an iso-butyl group, a tert-butyl group, a 1-methylpentyl group or a 1-ethylpropyl group, more preferably a tert-butyl group.

The cyclic hydrocarbon group may be a monocyclic saturated hydrocarbon group such as a cyclobutyl group, a cycloheptyl group or a cyclohexyl group, a saturated cyclic hydrocarbon assembly group such as a 4-cyclohexylcyclohexyl group, a polycyclic saturated hydrocarbon group such as a 1-decahydronaphthyl group or a 2-decahydronaphthyl group, a bridged saturated hydrocarbon group such as a 1-norbornyl group or a 1-adamantyl group, a spiro hydrocarbon group such as a spiro[3.4]octyl group, or an aromatic hydrocarbon group such as a phenyl group or a benzyl group.

Examples of such a monomer include vinyl ether, allyl ether, alkyl vinyl esters, alkyl allyl esters, acrylic esters and methacrylic esters which have a tert-butyl group, a cyclohexyl group, a 1-adamantyl group or a phenyl group in the side chain, and specifically speaking, cyclohexyl vinyl ether, tert-butyl vinyl ether, tert-butyl vinyl ester or vinyl benzoate may be mentioned.

Two or more such monomers may be used in combination.

The content of units T is preferably from 10 to 45 mol%, more preferably from 12 to 40 mol%, particularly preferably from 15 to 35 mol%, relative to all the units in the fluorinated polymer in view of better weatherability of the cured film.

The fluorinated polymer may further contain fourth units (hereinafter referred to as "units H") based on a monomer having no fluorine atoms, no crosslinkable groups, no C₃₋₆ branched alkyl groups and no monovalent C₄₋₁₂ cyclic hydrocarbon groups, in addition to units F, units C and units T.

Such a monomer may be a vinyl ether, allyl ether, alkyl vinyl ester, alkyl allyl ester, olefin, acrylic ester or methacrylic ester having no fluorine atoms, no crosslinkable groups, no C₃₋₆ branched alkyl groups and no monovalent C₄₋₁₂ cyclic hydrocarbon groups, and specifically speaking, an alkyl vinyl ether (such as nonyl vinyl ether, 2-ethylhexyl vinyl ether, hexyl vinyl ether, ethyl vinyl ether or n-butyl vinyl ether), an alkyl allyl ether (such as ethyl allyl ether or hexyl allyl ether), a vinyl ester of a carboxylic acid (such as acetic acid, butyric acid or propionic acid), an allyl ester of a carboxylic acid (such as acetic acid, butyric acid or propionic acid), ethylene, propylene or isobutylene may be mentioned.

Two or more such monomers may be used in combination.

When the fluorinated polymer contain units H, the content of units H is preferably at most 50 mol%, particularly at most 30 mol%, relative to all the units in the fluorinated polymer.

The fluorinated polymer in the present invention preferably contains units F, units C, units T and units H in amounts of from 20 to 70 mol%, from 1 to 40 mol%, from 10 to 45 mol% and from 0 to 50 mol%, respectively, relative to all the units in the fluorinated polymer in view of the weatherability and resistance of staining of the cured film.

The Mn of the fluorinated polymer is preferably from 5,000 to 200,000, more preferably from 10,000 to 180,000.

When the crosslinkable group is a hydroxy group, the hydroxy value of the fluorinated polymer is preferably at most 200 mg KOH/g in view of the hardness of the cured film. The hydroxy value of the fluorinated polymer is more preferably from 10 to 150 mg KOH/g, particularly preferably form 20 to 100 mg KOH/g.

The fluorine content of the fluorinated polymer is preferably at least 10 mass%, more preferably at least 15 mass%, further preferably at least 20 mass%. The fluorine content is preferably at most 70 mas%. When the fluorine content of the fluorinated polymer is at least 10 mass%, a more weatherable cured film is obtained. When the fluorine content of the fluorinated polymer is at most 70 mass%, the resulting cured film has a smooth surface.

The Tg of the fluorinated polymer in the present invention is 50°C or above in view of the resistance to staining of the cured film and is preferably 150°C or below, more preferably 120°C or below, particularly preferably 100°C or below. When the Tg of the fluorinated polymer is 150°C or below, the resulting cured film has a smooth surface.

The content of the fluorinated polymer is preferably from 20 to 80 mass%, more preferably from 25 to 75 mass% relative to the total solid content of the coating composition of the present invention. Bringing the content of the fluorinated polymer within the above-mentioned range improves resistance to staining and weatherability.

The fluorinated polymer in the present invention may be produced by polymerizing a mixture of monomers as the precursors of the respective units without particular restrictions on the process.

The fluorine-free polymer in the present invention means a polymer which does not contain fluorine atoms. The fluorine-free polymer in the present invention may be a polymer formed by addition polymerization of polymerizable monomers having a carbon-carbon double bond (hereinafter referred to also as "vinyl polymer") like the above-mentioned fluorinated polymer or may be a polymer formed by other modes of polymerization such as condensation polymerization and ring opening polymerization.

As the vinyl polymer, an olefin polymer, an acrylate polymer, a polystyrene polymer or the like may be mentioned. As the polymer formed by condensation polymerization or ring opening polymerization, a polycarbonate polymer, a polyester polymer, a polyamide polymer, a polyurethane polymer, a polyether polymer or the like may be mentioned.

The fluorine-free polymer in the present invention has at least two second crosslinkable groups. The second crosslinkable group may be the same as or different from the first crosslinkable group. The second crosslinkable group may be reactive with the first crosslinkable group. The second crosslinkable group may be a hydroxy group, a carboxy group, an amino group, a hydrolyzable silyl group (such as an alkoxysilyl group) or the like. The second crosslinkable group is preferably a hydroxy group or a carboxy group, particularly preferably a hydroxy group.

The vinyl polymer having second crosslinkable groups is preferably a vinyl polymer having units based on a monomer having second crosslinkable groups. The polymer formed by condensation polymerization or ring opening polymerization preferably has the second crosslinkable groups at both ends of the main chain and may have a second crosslinkable group in the side chain.

The fluorine-free polymer in the present invention is preferably a polymer formed by condensation polymerization or ring opening polymerization such as a polycarbonate polymer, a polyester polymer, a polyoxyalkylene polymer, a polyether ester polymer, in view of the scratch resistance of the cured film. As the polymer formed by condensation polymerization or ring opening polymerization, a polycarbonate polymer or a polyester polymer is particularly preferred. The second crosslinkable group in the fluorine-free polymer is preferably a hydroxy group or a caboxy group, particularly preferably a hydroxy group. The number of the second crosslinkable groups in one molecule of the fluorine-free polymer is preferably from 2 to 6, more preferably from 2 to 4.

The fluorine-free polymer in the present invention is particularly preferably a polycarbonate diol or a polyester diol.

The Mn of the fluorine-free polymer is preferably at least 300, more preferably at least 1,000, particularly preferably at least 1,500. The Mn of the fluorine-free polymer is preferably at most 8,000, preferably at most 4,000. A fluorine-free polymer having a Mn within this range is compatible with the fluorinated polymer and can form a harder cured film, which is likely to have better scratch resistance.

When the fluorine-free polymer has a hydroxy group, the hydroxy value of the fluorine-free polymer is preferably at most 250 mg KOH/g, more preferably at most 200 mg KOH/g, particularly preferably at most 175 mg KOH/g, in view of the scratch resistance of the cured film. The hydroxy value of the fluorine-free polymer is preferably at least 10 mg KOH/g, more preferably 20 mg KOH/g, particularly preferably at least 50 mg KOH/g.

The Tg of the fluorine-free polymer is preferably 0°C or below, more preferably from -100 to 0°C, particularly preferably from -75 to -25°C in view of the compatibility with the fluorinated polymer.

The content of the fluorine-free polymer is preferably from 1 to 20 mass%, more preferably from 5 to 15 mass% relative to the total solid content of the coating composition in view of the scratch resistance of the cured film.

Two or more fluorine-free polymers may be used in combination. When two or more fluorine-free polymers are used in combination, their total content is preferably within the above-mentioned range.

A polycarbonate polyol is a fluorine-free polymer having a plurality of carbonate groups and a plurality of hydroxy groups. As the polycarbonate polyol, a polycarbonate polyol which is a solid at ordinary temperature and has a melting point of 80°C or below or a polycarbonate polyol which is a liquid at ordinary temperature is preferred. The polycarbonate polyol preferably has two hydroxy groups per molecule, namely is preferably a polycarbonate diol.

The polycarbonate polyol may be a polycarbonate polyol, preferably polycarbonate diol, obtained by reacting a polyol (such as an aliphatic polyol or an alicyclic polyol) with a carbonate or phosgene.

As the aliphatic polyol, ethylene glycol, propylene glycol, 1,3-propanediol, 1,4-butanediol, 1,5-pentanediol, 3-methyl-1,5-pentanediol, 1,6-hexanediol, 1,8-nonanediol, 1,9-nonanediol, neopentyl glycol, diethylene glycol, dipropylene glycol or the like may be mentioned.

As the alicyclic polyol, 1,4-cyclohexanediol, 1,4-cyclohexanedimethanol or the like may be mentioned.

As the carbonate, ethylene carbonate, dimethyl carbonate, diphenyl carbonate or the like may be mentioned.

Two or more polycarbonate polyols may be used in combination.

The polycarbonate polyol may be a commercial product such as PLACCEL™ CD CD205, CD205PL, CD205HL, CD210, CD210PL, CD210HL, CD220, CD220PL and CD220HL manufactured by Daicel Chemical Industries Ltd., DURANOL®T-4671, T-4672, T-4691, T-4692, T-5650J, T-5650E, T-5651, T-5652, T-6001 and T-6002 manufactured by Asahi Kasei Corporation, KURARAY POLYOL™ C-1015N, C-1050, C-1065N, C-1090, C-2015N, C-2065N and C-2090 manufactured by KURARAY CO. LTD., and NIPPOLAN™ 981, 980R and 982R manufactured by Nippon Polyurethane Industry Co., Ltd.

A polyester polyol is a fluorine-free polymer having a plurality of ester bonds and a plurality of hydroxy groups. As the polyester polyol, a polyester polyol which is a liquid at ordinary temperature is preferred. The polyester polyol particularly preferably has two hydroxy groups per molecule, namely is particularly preferably a polycarbonate diol.

The polyester polyol may, for example, be a polyester polyol obtained by condensation polymerization of a dibasic acid and a diol, or a polylactone diol obtained by ring opening polymerization of a lactone. As the polyester polyol, two or more kinds may be used in combination.

As the dibasic acid, an aliphatic dibasic acid such as succinic acid, glutaric acid, adipic acid, pimelic acid, suberic acid, azelaic acid, sebacic acid or dodecanedioic acid, or an aromatic dibasic acid such as isophthalic acid, terephthalic acid or naphthalenedicarboxylic acid may be mentioned.

As the diol, ethylene glycol, diethylene glycol, propylene glycol, 1,3-propanediol, 2-methyl-1,3-butanediol, 1,4-butanediol, neopentyl glycol, 1,5-pentanediol, 2-methyl-1,5-pentanediol, 3-methyl-1,5-pentanediol, 1,6-hexanediol, 2,2,4-trimethyl-1,6-hexanediol, 3,3,5-trimethyl-1,6-hexanediol, 2,3,5-trimethylpentanediol, 1,9-nonanediol, 2-methyl-1,8-octanediol, decanediol, dodecanediol or the like may be mentioned.

As the lactone, ε-caprolactone, β-methyl-δ-valerolactone or the like may be mentioned.

The polyester polyol may be a commercial product such as FLEXOREZ A307 manufactured by Kusumoto Chemicals, Ltd.

In the present invention, the SP value of the fluorinated polymer is preferably from 1 to 50 (J/cm³)^{1/2}, more preferably from 5 to 50 (J/cm³)^{1/2}, while the SP value of the fluorine-free polymer is preferably from 1 to 50 (J/cm³)^{1/2}, more preferably from 5 to 30 (J/cm³)^{1/2}.

The absolute difference (|SP1 - SP2|) between the SP values of the fluorinated polymer (SP1) and the SP of the fluorine-free polymer (SP2) is preferably from 0 to 25 (J/cm³)^{1/2}, particularly preferably from 0 to 15 (J/cm³)^{1/2}. When the absolute difference in SP value is within the above-mentioned range, the compatibility between the fluorinated polymer and the fluorine-free polymer is good, and the scratch resistance and resistance to staining of the cured film improves.

The curing agent in the present invention is a compound having at least two functional groups reactive with both the first and second crosslinkable groups. The number of functional groups in the curing agent is usually at most 30, though there is no particular upper limit.

The curing agent may be an isocyanate curing agent, an amine curing agent (such as a melamine resin, a guanamine resin, a sulfamide resin, a urea resin or an aniline resin), a β-hydroxyalkylamide curing agent, an epoxy curing agent (such as a triglycidyl isocyanurate curing agent), a carbodiimide curing agent or the like. As the curing agent, two or more kinds may be used in combination.

When the fluorinated polymer has a hydroxy group as the crosslinkable group, the curing agent is preferably an isocyanate curing agent in view of the bonding between the cured film and the substrate and the hardness of the cured film.

The isocyanate curing agent may be a curing agent having an isocyanato group or a curing agent having a blocked isocyanato group (which forms an isocyanato group upon heating or the like) (hereinafter referred to as "blocked isocyanate curing agent").

As the isocyanate curing agent having an isocyanato group, an alicyclic polyisocyanate such as isophorone diisocyanate (IPDI), dicyclohexylmethane diisocyanate (HMDI), methylcyclohexane diisocyanate or bis(isocyanatomethyl)cyclohexane, an aliphatic polyisocyanate such as hexamethylene diisocyanate (HDI), dimer acid diisocyanate or lysine diisocyanate, or a modified product (such as a biuret, an isocyanurate or an adduct) of such a compound may be mentioned.

The adduct is a compound having an isocyanato group obtained by reacting a polyisocyanate and a low-molecular compound having an active hydrogen. As the low-molecular compound having an active hydrogen, water, a polyhydric alcohol, a polyamine, an alkanolamine or the like may be mentioned. Specifically speaking, ethylene glycol, propylene glycol, trimethylolpropane, glycerin, sorbitol, ethylenediamine, ethanolamine, diethanolamine or the like may be mentioned. As the low-molecular compound having an active hydrogen, a polyhydric alcohol is particularly preferred.

Among these isocyanate curing agents, adducts of the above-mentioned compounds, especially of HDI, are preferred because a more flexible and crack-resistant cured film would be obtained.

A blocked isocyanate curing agent can be produced by reacting such a polyisocyanate compound as mentioned above with a blocking agent.

The blocking agent may be an alcohol (such as methanol, ethanol or benzyl alcohol), a phenol (such as phenol or cresol), a lactam (such as caprolactam or butyrolactam), an oxime (such as cyclohexanone, oxime or methyl ethyl ketoxime) or the like.

The content of the curing agent is preferably from 100 to 200 parts by mass, more preferably from 50 to 150 parts by mass, relative to 100 parts by mass of the fluorinated polymer in the coating composition of the present invention. When the content of the curing agent is within the above-mentioned range, the fluorinated polymer crosslinks well.

The coating composition of the present invention may contain a curing catalyst.

The curing catalyst is a compound which promotes the curing reaction using the above-mentioned curing agent and may be selected from known curing catalysts according to the kind of the curing agent. Usually, the content of the curing catalyst is preferably from 0.00001 to 0.01 parts by mass relative to 100 parts by mass of the curing agent.

The coating composition of the present invention may contain components other than those mentioned above. These other components include various liquid media (such as water and organic solvents), UV absorbers (such as various organic UV absorbers and inorganic UV absorbers), light stabilizers (such as hindered amine light stabilizers), matting agents (such as ultrafine synthetic silica), levelling agents, surface adjustment agents (for improvement of the surface smoothness of the cured film), surfactants, degassers, plasticizers, fillers, heat stabilizers, thickeners, dispersants, antistatic agents, rust preventives, silane coupling agents, stainproofing agents, antifouling agents and the like.

The coating composition of the present invention may be used in the form of a solution (a coating composition dissolved in a liquid medium such as an organic solvent), an aqueous dispersion or a powder, preferably in the form of a solution, more preferably in the form of a coating composition containing an organic solvent.

In the case of a powder composition, the content of a liquid medium in the coating composition is about 1 mass% or less, preferably 0.5 mass% or less, more preferably 0.1 mass% or less, particularly preferably 0 mass%.

As the organic solvent, for example, ethanol, tert-butyl alcohol, mineral spirits, mineral turpentine, toluene, xylene, methyl ethyl ketone, butyl acetate and the like may be mentioned.

The coating composition of the present invention may be produced by known methods. When the coating composition in the form of a solution, it is produced by dissolving the above-mentioned components in a solvent with a mixer such as Disper. When the coating composition is in the form of powder, it is produced, for example, by kneading a powder mixture of components through an extruder, then cooling and grinding and classifying the extrudate into a powder coating of the desired particle size, and, if necessary, mixing with additives.

The method for manufacturing a vehicle interior member of the present invention comprises forming a coated film by applying the coating composition of the present invention and curing the coated film to form a cured film. The method provides a vehicle interior member having a vehicle interior substrate and a cured film on the vehicle interior substrate. Because the resulting vehicle interior member has a cured film formed from the coating composition of the present invention, it is excellent in scratch resistance and resistance to staining.

The vehicle interior member may, for example, be a dashboard (instrument panel), a center console, a door trim, a center cluster, a switch panel or a shift nob.

When the coating composition of the present invention contains a liquid medium, the coating composition is applied to form a coated film containing the liquid medium, then the coated film is dried to form a coated film which does not contain the liquid medium, and the coating layer is cured, if necessary, by heating. When the coating composition of the present invention is in the form of a solution, the coating composition of the present invention is applied and dried to remove the organic solvent, and the resulting coated film which does not contain the organic layer is cured.

The coating composition may be applied directly onto the vehicle interior substrate or onto a resin film to be bonded to the vehicle interior substrate. In the latter case, the method for manufacturing a vehicle interior member of the present invention further comprises a step of bonding the resin film having a cured film to the vehicle interior substrate.

The material constituting the vehicle interior substrate may, for example, be a polycarbonate resin, an acrylic resin, a methacrylic resin, an acrylonitrile-butadienestyrene copolymer (ABS resin), polystyrene, polypropylene or a polyester resin (such as polyethylene terephthalate (PET) or polybutylene terephthalate (PBT)).

The material constituting the resin film may, for example, be a polycarbonate resin, an acrylic resin, a methacrylic resin, an ABS resin, a polyolefin resin (such as polyethylene or polypropylene), a polyvinyl halide resin (such as polyvinyl chloride, polyvinylidene chloride, polyvinyl fluoride or polyvinylidene fluoride), a polyester resin (such as polyethylene terephthalate or polybutylene terephthalate), a polyamide resin (such as nylon 6, nylon 66, MXD nylon (m-xylenediamine-adipic acid copolymer)), a substituted olefin polymer (such as polyvinyl acetate or polyvinyl alcohol), EVA (ethylene-vinyl alcohol copolymer) or an ethylene-tetrafluoroethylene copolymer. The resin film may be constituted by two or more of these materials.

The coating composition may be applied, for example, by sponge coating, spray coating, curtain coating (flow coating), roll coating, cast coating, dip coating, spin coating, die coating, electrostatic coating, electrostatic spray coating, electrostatic dip coating or fluidization dip coating.

A coated film containing an organic solvent may be dried, for example, naturally, in a vacuum, centrifugally or by heating, preferably by heating, which also serves as the curing treatment described below.

The heating temperature for heat drying is preferably from 15 to 45°C, more preferably from 20 to 40°C, for sufficient curing of the coating layer. The heating time for heat drying is from 15 minutes to 14 days, more preferably from 30 minutes to 10 days.

The coated film may be cured, for example, by heat treatment. In this case, the heating temperature is preferably from 40 to 200°C, more preferably from 45 to 150°C because bubbles are unlikely to form in the cured film. The heating time is preferably from 1 minute to 3 hours, more preferably from 3 minutes to 2 hours.

The cured film is preferably from 5 to 150 µm thick, particularly preferably from 10 to 100 µm thick. When the cured film is 5 µm or thicker, it is more scratch resistant and resistant to staining, and when the cured film is 15 µm or thinner, a lighter vehicle interior member is obtained.

The vehicle interior member of the present invention has the vehicle interior substrate and a cured film on the vehicle interior substrate which is formed from the above-mentioned coating composition. Because the vehicle interior member of the present invention has a cured film formed from the above-mentioned coating composition, it is excellent in resistance to staining and scratch resistance. The vehicle interior member of the present invention can be manufactured, for example, by the above-mentioned method for a vehicle interior member.

### EXAMPLES

In the following, the present invention will be described in detail with reference to Examples. However, the present invention is not limited to these Examples. Further, the blend amounts of the respective components in Tables as described later are based on mass. Ex. 1 to Ex. 5 are working Examples, and Ex. 6 to Ex. 7 are Comparative Examples.

### [Preparation of fluorinated polymer 1]

Into an autoclave, cyclohexyl vinyl ether (CHVE) (51.2 g), 4-hydroxybutyl vinyl ether (HBVE) (13.3 g), xylene (55.8 g), ethanol (15.7 g), potassium carbonate (1.1 g), a 50 mass% solution of tert-butyl peroxypivalate (PBPV) in xylene (0.7 g) and CF₂=CFCl (CTFE) (63 g) were introduced. The temperature in the autoclave was gradually raised to 55°C and maintained for 20 hours and then raised to 65°C and maintained for 5 hours. Then, the autoclave was cooled, and the insolubles were removed by filtration. Then, xylene and ethanol were distilled off under reduced pressure to obtain fluorinated polymer 1.

Fluorinated polymer 1 contained CTFE units, CHVE units and HBVE units in amounts of 50 mol%, 39 mol% and 11 mol%, respectively.

Fluorinated polymer 1 had a Tg of 55°C, a Mn of 12,000, a hydroxy value of 50 mg KOH/g, an SP value of 18.4 (J/cm³)^{1/2} and a fluorine content of 23.7 mass%.

### [Preparation of fluorinated polymer 2]

The procedure for preparation of fluorinated polymer 1 was followed except that ethyl vinyl ether (EVE) was used in addition to the monomers used for preparation of fluorinated polymer 1, and the amounts of the respective monomers were adjusted to obtain fluorinated polymer 2. Fluorinated polymer 2 contained CTFE units, CHVE units, HBVE units and EVE units in amounts of 50 mol%, 15 mol%, 10 mol% and 25 mol%, respectively.

Fluorinated polymer 2 had a Tg of 37°C, a Mn of 12,000, a hydroxy value of 52 mg KOH/g, an SP value of 8.7 (J/cm³)^{1/2} and a fluorine content of 26.7 mass%.

### [Preparation of coating compositions]

The respective components shown in Table 1 were mixed in the amounts (parts by mass) shown in Table 1, to obtain coating compositions of working Examples and Comparative Examples. The components used will be described below.

### <Fluorinated polymer solutions>

▪ Fluorinated polymer solution 1: a solution of fluorinated polymer 1 in butyl acetate (solid content 50 mass%). The solid content (parts by mass) of the fluorinated polymer solution is parenthesized in Table 1.
▪ Fluorinated polymer solution 2: a solution of fluorinated polymer 2 in butyl acetate (solid content 50 mass%). The solid content (parts by mass) of the fluorinated polymer solution is parenthesized in Table 1.

### <Polycarbonate polyols>

▪ T-5652: "DURANOL™ T-5652" (polycarbonate diol manufactured by Asahi Kasei Corporation, Mn: 2,000, hydroxy value: 50 mg KOH/g, Tg: -54°C, SP value: 9.6 (J/cm³)^{1/2})
▪ T-5650E: "DURANOL™ T-5650E" (polycarbonate diol manufactured by Asahi Kasei Corporation, Mn: 500, hydroxy value: 200 mg KOH/g, Tg: -50°C or below, SP value: 10.5 (J/cm³)^{1/2})

### <Polyester polyol>

▪ A307: "FLEXOREZ™ A307" (polyester polyol manufactured by King Industries, Mn: 1,500, hydroxy value: 140 mg KOH/g, Tg: -32°C, SP value: 10.9 (J/cm³)^{1/2}) <Curing agents>
▪ CORONATE HX: ™ (HDI isocyanurate type polyisocyanate curing agent manufactured by Nippon Polyurethane Industry Co., Ltd., solid content 100 mass%, standard type)
▪ E405-70B: "DURANATE™ E405-70B" (HDI adduct type polyisocyanate curing agent in butyl acetate, manufactured by Asahi Kasei Corporation, solid content 70 mass%, high-flexure grade) The solid content of E405-70B is parenthesized in Table 1.

### <Curing catalyst>

▪ DBTDL solution: a 10,000-fold dilution of dibutyltin dilaurate with butyl acetate. The solid content (parts by mass) of the DBTDL solution is parenthesized in Table 1.

### [Evaluation tests]

### <Preparation of test specimens>

The coating compositions of working Examples and Comparative Examples were applied onto acrylic resin films with a bar coater, and the resulting coated films were dried at 25°C for 30 minutes by heating and then heated at 80°C for 10 minutes to obtain test specimens having a cured film (thickness 50 µm) formed on a film from the coating compositions.

The following evaluation tests were carried out on the resulting test specimens.

### <Resistance to staining (resistance to suntan oil)>

A drop (0.005 g) of sunscreen (Coppertone Water BABIES Lotion SPF 50) was dripped onto the cured film of a test specimen, then spread with a brush over an area of 2 × 3 cm, and the test specimen was incubated at 80°C for 1 hour with 5 pieces of gauze on the area. Then, the sunscreen was wiped off with the gauze, and the test specimen was washed with water. The cured film was visually examined for change on the following scale.

○: No change was observed in the cured film
Δ: Slight stains were observed
×: Clear stains were observed with terrible surface degradation

### <Elongation>

A tensile test was conducted on 10 × 100 mm test specimens with Autograph AGS10KNG (manufactured by Shimadzu Corporation) in TERMOSTATIC CHAMBER Model: TCRI-200SP (manufactured by Shimadzu Corporation) with a chuck spacing of 50 mm at a rate of pulling of 50 mm/min at a thermostatic chamber temperature of 23°C, and the elongation of the test specimen at crack initiation in the cured film was read by naked eye.

○: The elongation of the test specimen from its initial state was 100% or higher.

Δ: The elongation of the test specimen from its initial state was from 50 to less than 100%.

×: The elongation of the test specimen from its initial state was from 0 to less than 50%.

### <Scratch resistance (abrasion resistance)>

The surface of the cured film of a test specimen was rubbed with reciprocating steel wool (#0000) under a load of 200 g 15 times, and the surface of the cured film was observed by naked eye and evaluated on the following scale.

○: No scratches were observed.

Δ: Scratches were observed over less than 20% of the entire surface area of the test specimen.

×: Scratches were observed over 20% or more of the entire surface area of the test specimen.

### <Results of evaluations>

The results of the above-mentioned evaluation tests are shown below in Table 1.

**[Table 1]**

| | | Ex. 1 | Ex. 2 | Ex. 3 | Ex. 4 | Ex. 5 | Ex. 6 | Ex. 7 |
|---|---|---|---|---|---|---|---|---|
| Fluorinated polymer solution 1 | Fluorinated polymer 1 | 16 | 16 | 16 | 16 | 16 | | |
| | | (8) | (8) | (8) | (8) | (8) | | |
| Fluorinated polymer solution 2 | Fluorinated polymer 2 | | | | | | 16 | 16 |
| | | | | | | | (8) | (8) |
| Polycarbonate polyol | T-5652 | 2 | | | 2 | | 2 | |
| | T-5650E | | 2 | | | | | 2 |
| Polyester polyol | A307 | | | 2 | | 2 | | |
| Curing agent | CORONATE HX | | | | 9.4 | 5.5 | | |
| | E405-70B | 11.7 | 13.8 | 11.7 | | | 11.7 | 11.7 |
| | | (8.19) | (9.66) | (8.19) | | | (8.19) | (8.19) |
| Curing catalyst | DBTDL solution | 0.6 | 0.6 | 0.6 | 0.6 | 0.6 | 0.6 | 0.6 |
| | | (0.00006) | (0.00006) | (0.00006) | (0.00006) | (0.00006) | (0.00006) | (0.00006) |
| Results of evaluations | Resistance to staining (resistance to suntan oil) | ○ | ○ | ○ | ○ | ○ | × | × |
| | Elongation | ○ | ○ | ○ | Δ | Δ | ○ | ○ |
| | Scratch resistance | ○ | Δ | ○ | ○ | ○ | Δ | × |

As shown in Table 1, the cured films obtained from the coating compositions of Ex. 1 to Ex. 5 were excellent in scratch resistance and resistance to sunscreen staining.

The comparison between Ex. 1 and Ex. 2 indicates that use of a fluorine-free polymer (polycarbonate polyol) having a number average molecular weight of at least 1,000 (as in Ex. 1) affords a cured film with higher scratch resistance.

The comparison between Ex. 1 and Ex. 4 and between Ex. 3 and Ex. 5 indicates that use of an adduct as the curing agent (as in Ex. 1 and Ex. 3) affords a cured film having excellent flexibility.

Meanwhile, although the coating compositions of Ex. 6 to Ex. 7 contained a fluorinated polymer, the use of a fluorinated polymer having a Tg lower than 50°C resulted in poor resistance to staining.

The entire disclosure of Japanese Patent Application No. 2016-212758 filed on October 31, 2016 including specification, claims and summary is incorporated herein by reference in its entirety.

## Claims

1. A coating composition for vehicle interior members, which comprises a fluorinated polymer having units based on a fluoroolefin and units based on a monomer having a first crosslinkable group, a fluorine-free polymer having at least two second crosslinkable groups, and a curing agent having at least two functional groups reactive with both the first and second crosslinkable groups, wherein the glass transition temperature of the fluorinated polymer is 50°C or above.

2. The coating composition according to Claim 1, wherein the number average molecular weight of the fluorinated polymer and the number average molecular weight of the fluorine-free polymer are both at least 1,000.

3. The coating composition according to Claim 1 or 2, wherein the fluoroolefin is tetrafluoroethylene or chlorotrifluoroethylene.

4. The coating composition according to any one of Claims 1 to 3, wherein the fluorinated polymer further contains third units based on a monomer which does not contain fluorine atoms or the first crosslinkable group and has a C₃₋₆ branched alkyl group or a C₄₋₁₂ monovalent cyclic hydrocarbon group, and the content of the third units is from 10 to 45 mol% relative to all the units in the fluorinated polymer.

5. The coating composition according to any one of Claims 1 to 4, wherein the fluorine-free polymer has a glass transition temperature of 0°C or below.

6. The coating composition according to any one of Claims 1 to 5, wherein the fluorine-free polymer is produced by condensation polymerization or ring opening polymerization.

7. The coating composition according to any one of Claims 1 to 6, wherein both the first and second crosslinkable groups are hydroxy groups.

8. The coating composition according to Claim 7, wherein the fluorinated polymer has a hydroxy value of at most 200 mg KOH/g.

9. The coating composition according to Claim 7, wherein the fluorine-free polymer has a hydroxy value of at most 250 mg KOH/g.

10. The coating composition according to Claim 6, 7 or 9, wherein the fluorine-free polymer is polycarbonate polyol or polyester polyol.

11. The coating composition according to any one of Claims 1 to 10, wherein the absolute difference between the fluorinated polymer and the fluorine-free polymer in SP value is from 0 to 25 (J/cm³)^{1/2}.

12. The coating composition according to any one of Claims 1 to 11, wherein the curing agent has an isocyanato group or a blocked isocyanato group.

13. A vehicle interior member having a vehicle interior substrate and a cured film on the vehicle interior substrate, wherein the cured film is formed by using the coating composition as defined in any one of Claims 1 to 12.

14. A method for manufacturing a vehicle interior member, which comprises forming a coated film by applying the coating composition as defined in any one of Claims 1 to 12, and curing the coated film to form a cured film.
